# EUROPEAN PATENT SPECIFICATION

(11) **EP 1 571 057 B1**
(45) Date of publication and mention of the grant of the patent: **02.01.2008**
(21) Application number: 04380293.3
(22) Date of filing: 30.12.2004
(51) Int. Cl.: B60S 1/34, B60S 1/04

(54) **Windshield wiper arm for automotive vehicles**
Kraftfahrzeug-Scheibenwischerarm
Bras d'essuie-glace pour véhicules automobiles

(30) Priority: 04.03.2004 ES 200400531 U
(43) Date of publication of application: 07.09.2005
(73) Proprietor: Seat, S.A., 08040 Barcelona (ES)
(72) Inventor: Escribano Felguera, Juan de Dios, 08760 Martorell (Barcelona) (ES); Jund, Jean-Christophe, 08760 Martorell (Barcelona) (ES)
(74) Representative: Carvajal y Urquijo, Isabel

(56) References cited:
- WO-A-00/24615
- DE-A1- 4 405 926
- DE-A1- 10 109 088
- DE-A1- 19 907 390
- US-A- 5 263 759
- US-A1- 2003 110 587

## Description

The present invention refers to a frontal body of a vehicle comprising a windshield wiper arm for automotive vehicles which in its resting position abuts against the adjacent pillar and comprises a frame which is hinged at one of its ends to a base for connecting to the shaft of a drive motor and serves as a support for a cleaning wiper.

In Utility Model 200300149 (publication number ES 1053824 U of the same applicants, an automotive vehicle body front portion is disclosed in which the windshield wipers, when they are in their resting position, abut against the pillars laterally limiting the windshield, rather than occupying an approximately horizontal position in the lower portion as they traditionally do. This arrangement has the advantage that the windshield wipers do not constitute an obstacle both for the driver's view and against the air when the vehicle is moving.

The main drawback of this arrangement of the windshield wiper arms is the difficulty in keeping them in a position parallel to the pillars limiting the windshield when said arms are at a standstill in the resting position, a situation in which both the clearance between the arm and drip rail profile and the contact area between these components must be effectively controlled.

The present invention has as an object a windshield wiper arm constituted such that it eliminates the drawbacks set forth and allows achieving a correct positioning of the arm when it is in its standstill position, parallel to the pillar, maintaining a single and valid clearance between the arm and pillar.

To that end, according to the present invention, the frame of the windshield wiper arm is constituted of a grooved profile and is hinged at one end to the base for connecting to the shaft of the drive motor, according to a shaft perpendicular to the shaft of said motor, and houses the cleaning wiper-blade along the length thereof. In the wall facing the adjacent pillar of the windshield, this profile has at least one projection of convex curved surface, projecting with regard to the outer surface of said wall, through the projection of which the profile rests on the pillar when it is in its resting position. The projection of convex curved surface projects with regard to the outer surface of the wall of the grooved profile in a portion which will demarcate the spacing between the grooved profile and the pillar in the standstill position of the windshield wiper.

The existence of this projection of convex curved surface, for example of a spherical surface, will enable that when the windshield wiper is lowered against the window after the replacement of the wipers, the contact surface with the pillar is kept controlled, and since the projection has a spherical shape, it will allow the arm to slide over the drip rail profile, returning to its exact standstill position of resting on the window of the vehicle abutting against the corresponding pillar.

On the other hand, by forming element defining the spacing between the arm and the pillar of the frame of the windshield wiper, its manufacture is simple and economic in comparison with other solutions, as could be the arrangement of auxiliary rubber stops added to the drip rail profile of the pillar or even arranged on the arm itself.

So that the windshield wiper in its standstill position is always in contact with the corresponding pillar, a prestressed assembly thereof is resorted to. That is, when the windshield wiper is at a standstill, it is not at a complete resting, but rather is actually exerting a small force on the drip rail profile of the pillar. When the user of a vehicle prepares to replace the used wiper-blade in the windshield wiper arm, he must exert a small force to separate the arm from the window and exchange the used wiper-blade for a new one, subsequently allowing the arm to drop on the window, the position of the arm being ensured thanks to the prestressing of its assembly and the existence of the projection of the frame defining the member for resting of said arm against the pillar.

The assembly of the windshield wiper arm in the vehicle can be carried out in a garage or on an assembly line aided by means of a jig defining the correct position for achieving the desired prestressing.

The prestressing situation will be obtained by providing the threading for fixing the arm to the shaft of the motor with the direction opposite to the displacement produced by the recovery of the position of the elastic members of said arm, and this is achieved by adapting the direction of the thread of the shaft where the windshield wiper arm unit is fixed.

The features of the invention will be better understood with the following description made in reference to the attached drawings, wherein a non-limiting embodiment is shown.

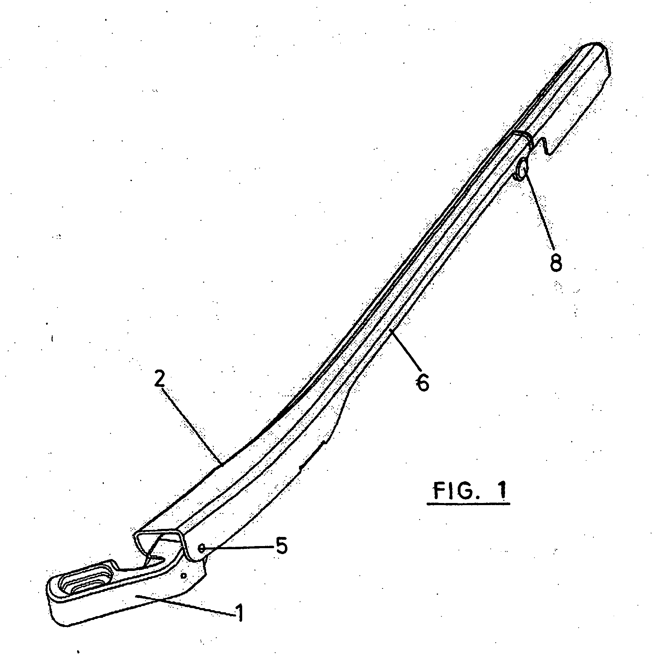

Figure 1 shows a perspective view of a windshield wiper arm constituted according to the invention.
Figure 2 shows a side elevational view of the arm of Figure 1.
Figure 3 shows a cross sectional view of the arm according to the III-III section line of Figure 2.

In the attached drawings a windshield wiper arm including a base 1 for fixing to the shaft of the drive motor, a frame 2, a return spring 3 and a cleaning wiper, is shown.

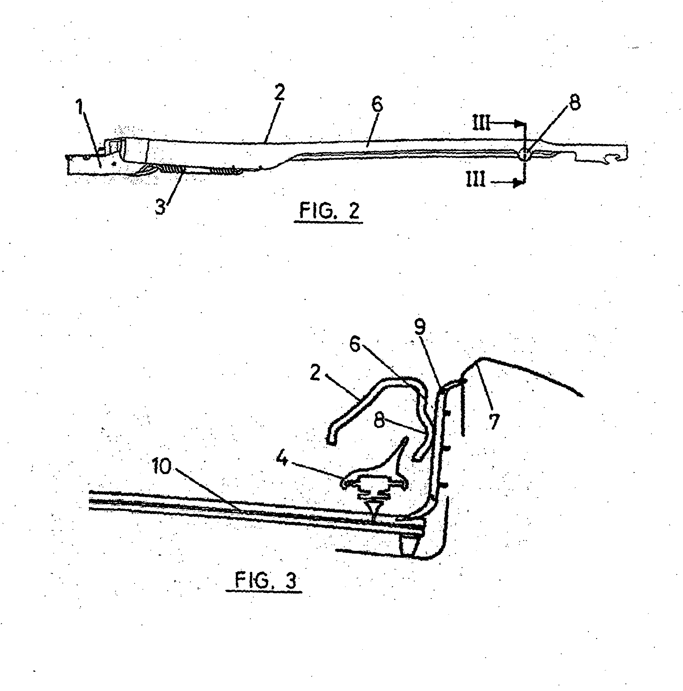

According to the present invention, the frame 2 of the arm is constituted of a grooved profile, as can be seen best in Figure 3, which is hinged at one end to the base 1 by means of a shaft 5 which is perpendicular to the shaft of the motor to which the windshield wiper is connected. The cleaning wiper-blade 4, of a constitution known in itself, runs along the inside this grooved profile 2.

The grooved profile 2 has on the wall 6 which is brought to face the corresponding pillar 7 of the windshield wiper, a projection 8 of convex curved surface, for example of a spherical surface, which as can be seen best in Figure 3, projects with regard to the outer surface of the wall 6. This projection or protuberance 8 constitutes the means for resting of the frame 2 and therefore of the windshield wiper on the drip rail profile 9 of the pillar 7, ensuring that the rest of the wall 6 of the profile 2 runs in a position parallel to the profile 9 of the pillar 7 with a certain spacing therebetween.

With the constitution set forth, it is possible to ensure a correct position of the windshield wiper in its standstill situation, in which it abuts against the pillar 7, resting on the drip rail profile 9 thereof through the protuberance or projection 8. This resting, almost on a point-basis, further prevents the windshield wiper from slipping over the profile 9 of the pillar, being partially overlaid thereon, whereupon the correct resting and positioning of the wiper 4 on the windshield 10 of the windshield wiper is ensured.

As has been indicated, to achieve that the frame 2 is urged against the profile 9 of the pillar 7, resting thereon by means of the projection or protuberance 8, the windshield wiper is assembled on the shaft of the drive motor with a slight prestressing situation.

As can be understood, the wall 6 of the grooved profile, faceable to the adjacent pillar, can have more than one projection or protuberance 8 along the length thereof.

## Claims

1. - Frontal body of a vehicle comprising:
- a windshield (10) which is surrounded by a structure comprising lateral pillars (7) and
- a windshield wiper, fixed to a drive motor by a base (1), said wiper comprising an arm (2), which rests in its standstill position abutting against the adjacent pillar (7) of the windshield (10), said arm,
- comprising a frame (2) which has a grooved profile, and is hinged at one of its ends to the base (1) by means of a shaft (5) perpendicular to the shaft of the drive motor, and
- supporting a cleaning wiper-blade (4), extending along the length thereof,
**characterized in that** the frame (2) has, on the wall facing the lateral pillar (7) of the windshield (10), at least one projection (8), formed integrally in said wall, said projection (8) having a convex curved surface through which said frame rests on said pillar (7) in the standstill position, defining a spacing between the arm and the pillar in said standstill position.

## Patentansprüche

1. Vorderteil einer Fahrzeugkarosserie, umfassend:
- eine Windschutzscheibe (10), die von einer Struktur umgeben ist, die seitliche Pfosten (7) umfasst, und
- einen Scheibenwischer, der mit einer Basis (1) an einen Antriebsmotor befestigt ist, wobei der Wischer einen Arm (2) umfasst, der ihn seiner Stillstandsposition an dem benachbarten Pfosten (7) der Windschutzscheibe (10) anliegt, wobei der Arm
- einen Rahmen (2) umfasst, der ein genutetes Profil aufweist und an einem seiner Enden an der Basis (1) mittels einer Welle (5), die senkrecht zu der Welle des Antriebsmotors verläuft, angelenkt ist, und
- ein Reinigungswischerblatt (4) trägt, das sich entlang seiner Länge erstreckt,
**dadurch gekennzeichnet, dass** der Rahmen (2) an der Wand, die dem seitlichen Pfosten (7) der Windschutzscheibe (10) zugewandt ist, mindestens einen Vorsprung (8) aufweist, der integral in der Wand ausgebildet ist, wobei der Vorsprung (8) eine konvexe gekrümmte Fläche aufweist, durch die der Rahmen in der Stillstandsposition an dem Pfosten (7) anliegt, wodurch in der Stillstandsposition ein Abstand zwischen dem Arm und dem Pfosten definiert wird.

## Revendications

1. Carrosserie avant d'un véhicule, comprenant :
- un pare-brise (10) entouré d'une structure comprenant des montants latéraux (7) et
- un essuie-glace de pare-brise, fixé à un moteur d'entraînement par une base (1) ledit essuie-glace comprenant un bras (2), qui repose dans sa position de blocage appuyé contre le montant adjacent (7) de l'essuie-glace (10), ledit bras
- comprenant un cadre (2) qui a un profil rainuré et est articulé à l'une de ses extrémités à la base (1) par un axe (5) perpendiculaire à l'axe du moteur d'entraînement, et
- supportant un balai de nettoyage d'essuie-glace (4), s'étendant le long de la longueur de celui-ci,
**caractérisé en ce que** le cadre (2) a, sur la paroi opposée au montant latéral (7) du pare-brise (10), au moins une saillie (8) moulée intégralement dans ladite paroi, ladite saillie (8) ayant une surface recourbée convexe à travers laquelle ledit cadre repose sur ledit montant (7) dans la position de blocage, définissant une espace entre le bras et le montant dans ladite position de blocage.
